# EUROPEAN PATENT APPLICATION

(11) **EP 4 336 066 A1**
(43) Date of publication of application: **13.03.2024**
(21) Application number: 22306331.4
(22) Date of filing: 08.09.2022
(51) Int. Cl.: F16H 1/04, F16H 55/18, F16H 55/14, F16H 55/06

(54) **GEAR ASSEMBLY FOR A SIDE STICK UNIT**

(71) Applicant: Ratier-Figeac SAS, 46100 Figeac Cedex (FR)
(72) Inventor: DELBOS, Eric, 46100 Figeac Cedex (FR)
(74) Representative: Dehns

(57) **Abstract**

A gear assembly (300) for a side stick on an aircraft is provided. The gear assembly includes a first gear (302), a second gear (304) configured to engage with the first gear, and a viscoelastic material (305) provided in the first gear.

## Description

### TECHNICAL FIELD

This disclosure relates to a gear assembly for a side stick unit, such as those used on aircraft to manoeuvre the aircraft operations.

### BACKGROUND

Joystick input devices are employed in aircraft to control and manoeuvre operations of an aircraft. For example, a pilot uses a joystick to command the aircraft during flight. In normal operations, a joystick may provide a force feedback to a pilot to provide a perception of the actual aircraft position to understand the aircraft situation and allow accurate piloting. Although applications take into account the force feedback, there may also be an effect of freeplay from the interaction of the gears in the joystick which may cause some issue for the pilot to obtain and provide accurate piloting. There is a need for an improved joystick arrangement.

### SUMMARY

In one aspect, there is provided a gear assembly for a side stick on an aircraft. The gear assembly includes a first gear, a second gear configured to engage with the first gear, and a viscoelastic material provided in the first gear.

In some examples, the first gear may include a first portion and a second portion. The first portion and the second portion may be separate and distinct parts that are configured to move axially relative to each other. Each of the first portion and the second portion may include an engagement surface (e.g. gear teeth) configured to engage with an engagement surface of the second gear. The first portion and the second portion may be separated by a gap. The viscoelastic material may be provided in the gap. At least one fixation device may be provided through the first portion and through the second portion. The at least one fixation device may be a bolt or a rivet.

In some examples, the first gear may include a plurality of first gear teeth. The plurality of first gear teeth may be non-parallel to a gear axis of the first gear.

In another aspect, there is provided a side stick assembly for an aircraft. The side stick assembly includes a side stick and at least one gear assembly described above.

In another aspect, there is provided an aircraft including the side stick assembly described above.

In yet another aspect, there is provided a method that includes providing a first gear, providing a second gear that engages with the first gear, and providing a viscoelastic material in the first gear.

In some example, the first gear may include a first portion and a second portion. The first portion and the second portion may be separate and distinct parts that are configured to move axially relative to each other. Each of the first portion and the second portion may include an engagement surface configured to engage with an engagement surface of the second gear. The first portion and the second portion may be separated by a gap. The viscoelastic material may be provided in the gap.

The method may further include providing at least one fixation device through the first portion and through the second portion. The at least one fixation device may be a bolt or a rivet.

### BRIEF DESCRIPTION OF THE DRAWINGS

Figure 1 shows an example of a stick assembly.
Figures 2a and 2b show a known example of a gear system for a stick assembly.
Figure 2c shows an angle versus torque graph of the gear system of Figures 2a and 2b.
Figures 3a, 3b, 3c and 3d show an example of a gear system for a stick assembly according to the present disclosure.
Figure 3e shows an angle versus torque graph of the gear system of Figures 3a-3d.
Figure 3f shows an example of at least one fixation means for the gear system of Figures 3a-3d.

### DETAILED DESCRIPTION

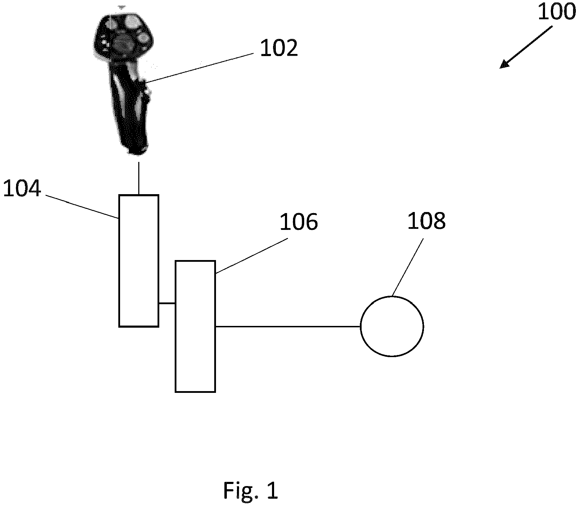

Figure 1 shows an example of a stick assembly, shown generally as 100. The stick assembly 100 includes a grip 102 (e.g. a joystick or control panel), a first gear assembly 104 and a second gear assembly 106. Of course, it is to be understood that a single stage gear assembly could be used. The stick assembly 100 also includes an electric motor 108. Movement of the grip 102 indicates to the first gear 104 and second gear 106 the movement that the pilot wishes to make. The electric motor 108 allows to provide pilot a force feedback.

Sensors (not shown) are used to control movement of the aircraft controls (e.g. elevators) to manoeuvre the aircraft (not shown) in response to the movement of the grip 102, first gear 104 and/or second gear 106. The electric motor 108 may provide force feedback to the grip 102 to indicate to the pilot a representative force that is being applied to external aircraft controls.

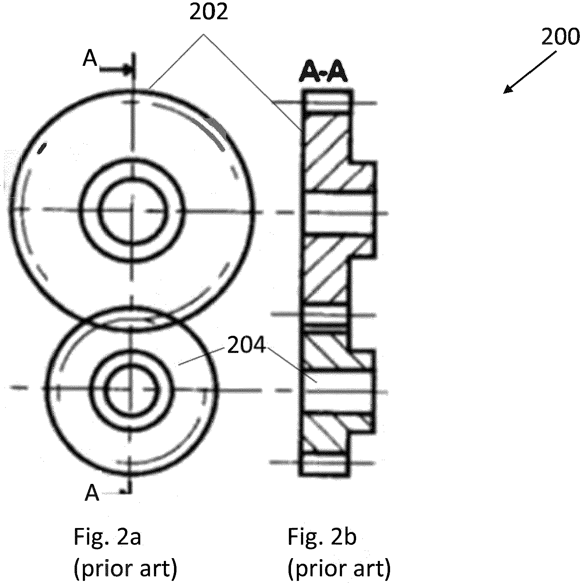

Figures 2a and 2b show a gear assembly 200 (e.g. a gear assembly that corresponds with a first gear assembly 104 and/or a second gear assembly 106 shown in Figure 1). The gear assembly 200 includes a first gear 202 and a second gear 204. Of course, the first gear 202 and second gear 204 may rotate in opposing directions. As the first gear 202 and the second gear 204 rotate, there may be an amount of 'freeplay' between the gaps of gear teeth, in use. The 'freeplay' may provide a feeling (e.g. by force) to the user of the grip that is undesirable during use of the side stick assembly, and may cause the pilot to feel a force that is not desired by the aircraft during manoeuvre.

Figure 2a shows an orientation of the first gear 202 and the second gear 204. Figure 2b shows a cross-section of the first gear 202 and the second gear 204 along lines A-A of Figure 2a.

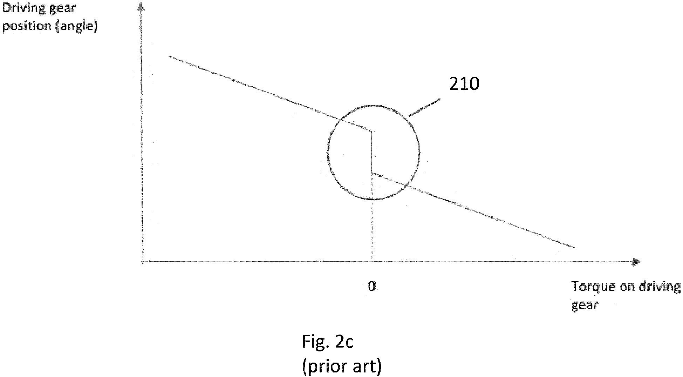

Figure 2c shows an example of a graph showing on the y-axis the position of the driving gear (e.g. the first gear 202) and on the x-axis is shown the torque on the driving gear (e.g. the first gear 202). As the pilot alters the position of the driving gear and the torque on the driving gear, a point 210 on the graph shows when 'freeplay' causes a sharp force to the pilot during use of the side stick assembly. This sharp force can cause confusion to the pilot as to whether they are utilising the side stick assembly successfully, or whether the side stick assembly has malfunctioned. The pilot may not be able to fly the aircraft with a high degree of accuracy.

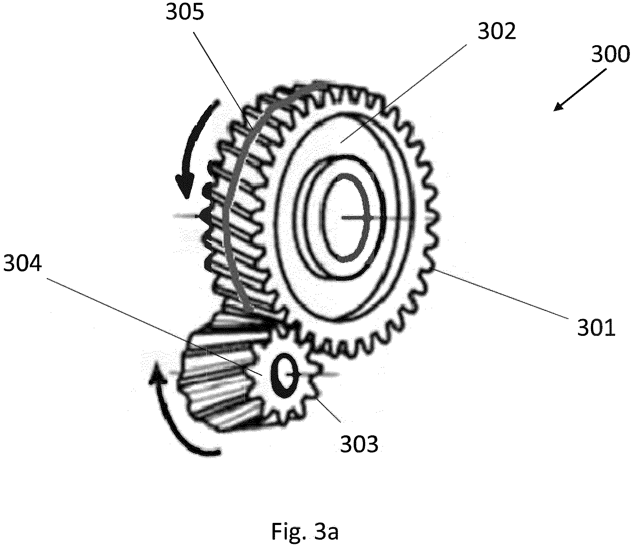

Generally, Figures 3a to 3f show a gear assembly 300 that allows for a reduction of the effects of 'freeplay' in a side stick assembly.

Figure 3a shows an example of a gear assembly 300. The gear assembly 300 includes a first gear 302 that may include a plurality of first gear teeth 301. The gear assembly 300 further includes a second gear 304 that may include a plurality of second gear teeth 303. Of course, it is to be envisaged that the first gear 302 and the second gear 304 may be conical friction wheels, in which there are no teeth. Further, it is envisaged that the first gear 302 and the second gear 304 may be a conical gear with straight teeth. In the example shown in Figure 3a, the plurality of first gear teeth 301 engage with the plurality of second gear teeth 303, in use. To avoid the effects of 'freeplay', a viscoelastic material 305 may be provided in the first gear 302. Of course, the viscoelastic material 305 may be provided optionally, or additionally, in the second gear 304.

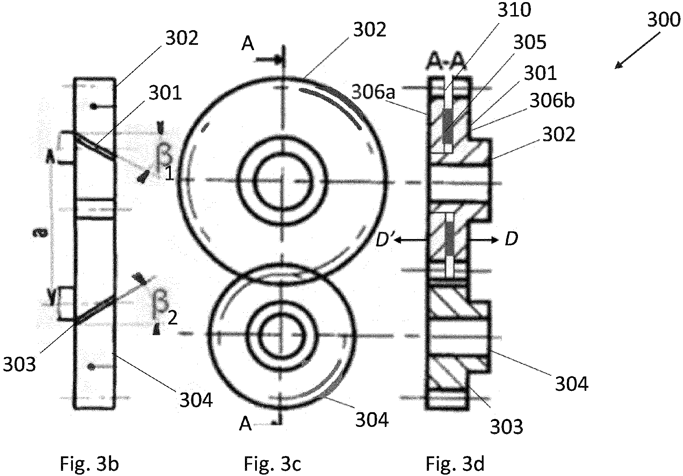

As shown in Figure 3b, and in an example where the first gear 302 and the second gear 304 include teeth, the plurality of first gear teeth 301 of the first gear 302 may be helical and may include a helical angle represented by β₁. Further, the plurality of second gear teeth 303 of the second gear 304 may also be helical and may also include a helical angle represented by β₂. β₁ and β₂ may be identical. Of course, it is not necessary for the plurality of first gear teeth 301 and/or the plurality of second gear teeth 303 to be helical. For example, chevron-type teeth or conical wheels may be used. In all examples, the first gear 302 and the second gear 304 have an engagement surface that is not parallel to the gear axis. The engagement surface may be the surface of the plurality of first gear teeth 301 and the surface of the plurality of second gear teeth 303, or the surface of the gears themselves, for example in the case of a conical friction wheel. This ensures that the axial pushing effect of the viscoelastic material can reduce the freeplay between both gears.

Figure 3c shows a representation of the first gear 302 and the second gear 304. Figure 3d shows a representation of the gear assembly 300 across the cross-section line A-A of Figure 3c. As shown in Figure 3d, the first gear 302 may include a first portion 306a and a second portion 306b. The first portion 306a and the second portion 306b are separate and distinct parts of the first gear 302 that are able to move axially, as represented by arrows D and D'. The first portion 306a and second portion 306b may be separated by a gap 310. The gap 310 therefore forms a channel extending radially inward (i.e. extending towards the centre of the first gear 302) in the first gear 302. The viscoelastic material 305 may be provided within the gap 310. The viscoelastic material 305 may be in the form of a disc, or an annulus, or the like. As an example, the gear 304, in use, engages with the first gear 302. For example, the plurality of first gear teeth 301 may engage with the plurality of second gear teeth 303. As the first portion 306a and the second portion 306b are axially movable relative to each other, the viscoelastic material 305 compresses when the first gear 302 engages with the second gear 304. The axial pushing effect of the viscoelastic material 305 presses the first portion 306a and/or the second portion 306b against the second gear 304. With this arrangement, the effects of 'freeplay' are altered so as to provide a smoother transition of force. Although Figure 3d shows the gap 310 in the plurality of first gear teeth 301, it is envisaged that a gap (not shown) may also be provided in the second gear 304 to receive a further viscoelastic material (not shown). Further, it is envisaged that the viscoelastic material may be provided in the first gear 302 and/or the second gear 304 to further reduce the effects of 'freeplay'.

Although there is shown a radial gap 310 in Figure 3d, it is also envisaged that the gap 310 may be provided in an axial configuration (not shown) in the first gear 302 and/or in the second gear 304. Further, it is also envisaged that there may be provided a combination of both a radial and an axial gap (not shown) in the first gear 302 and/or in the second gear 304.

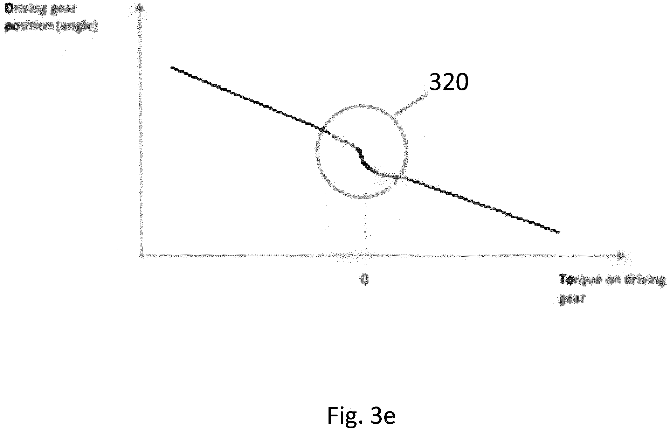

Figure 3e shows an example of a graph showing on the y-axis the position of the driving gear (e.g. the first gear 302) and on the x-axis is shown the torque on the driving gear (e.g. the first gear 302). As the pilot alters the position of the driving gear and the torque on the driving gear, a point 320 on the graph shows that 'freeplay' is altered so as to provide a smoother transition of force to the pilot during use of the side stick assembly. As shown in the graph, there is a much smoother transition (e.g. represented by more linear values than a sudden force shown in Figure 2d). Therefore, the effects of 'freeplay' in this example do not cause the pilot to question whether the stick assembly is working properly or if an additional (i.e., incorrect) force has been delivered to the pilot. This provides a higher degree of accuracy for the pilot flying the aircraft, as the force feel would be more accurate.

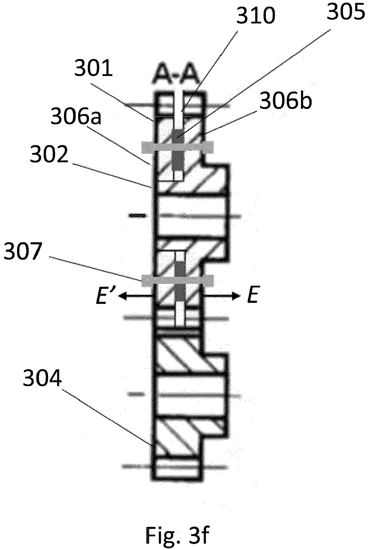

Figure 3f shows an example of how the first portion 306a and the second portion 306b may be attached relative to each other. As shown in Figure 3f, at least one fixation device 307 may be provided through the first portion 306a and the second portion 306b. The fixation device 307 is sized and shaped to allow for axial movement of the first portion 306a and the second portion 306b, as represented by arrows E and E'. As an optional example, and in addition to being provided through the first portion 306a and the second portion 306b, the at least one fixation device 307 may be provided through the gap 310, and further optionally through the viscoelastic material 305. The fixation device 307 allows for attachment of the first portion 306a and the second portion 306b, but also allows for axial movement of the first portion 306a and the second portion 306b to compensate for the effect of 'freeplay', as described above when the first gear 302 engages with the second gear 304. The fixation device 307 may be a bolt, a rivet, or the like, for example any type of fixation allowing a relative motion of the first portion 306a and the second portion 306b.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A gear assembly (300) for a side stick on an aircraft, the gear assembly comprising:
a first gear (302);
a second gear (304) configured to engage with the first gear; and
a viscoelastic material (305) provided in the first gear.

2. The gear assembly of claim 1, wherein the first gear (302) includes a first portion (306a) and a second portion (306b), and wherein the first portion (306a) and the second portion (306b) are separate and distinct parts that are configured to move axially relative to each other, and preferably wherein each of the first portion (306a) and the second portion (306b) comprises an engagement surface (301) configured to engage with an engagement surface (303) of the second gear (304).

3. The gear assembly of claim 2, wherein the first portion (306a) and the second portion (306b) are separated by a gap.

4. The gear assembly of claim 3, wherein the viscoelastic material is provided in the gap (310).

5. The gear assembly of claim 3 or 4, wherein at least one fixation device (307) is provided through the first portion (306a) and through the second portion (306b).

6. The gear assembly of claim 5, wherein the at least one fixation device (307) is a bolt or a rivet.

7. The gear assembly of any preceding claim, wherein the first gear (302) includes a plurality of first gear teeth (301).

8. The gear assembly of claim 7, wherein the plurality of first gear teeth (301) are non-parallel to a gear axis of the first gear (302).

9. A side stick assembly for an aircraft, said side stick assembly comprising:
a side stick; and
at least one gear assembly provided by any preceding claim.

10. An aircraft comprising the side stick assembly of claim 9.

11. A method, the method comprising:
providing a first gear (302);
providing a second gear (304) that engages with the first gear; and
providing a viscoelastic material (305) in the first gear.

12. The method of claim 11, wherein the first gear includes a first portion (306a) and a second portion (306b), and wherein the first portion (306a) and the second portion (306b) are separate and distinct parts that are configured to move axially relative to each other, and preferably, wherein each of the first portion (306a) and the second portion (306b) comprises an engagement surface (301) configured to engage with an engagement surface (303) of the second gear (304).

13. The method of claim 12, wherein the first portion (306a) and the second portion (306b) are separated by a gap (310).

14. The method of claim 13, wherein the viscoelastic material is provided in the gap (310).

15. The method of claim 13 or 14, the method further comprising: providing at least one fixation device (307) through the first portion (306a) and through the second portion (306b), and preferably wherein the at least one fixation device (307) is a bolt or a rivet.
